# EUROPEAN PATENT APPLICATION

(11) **EP 2 671 670 A1**
(43) Date of publication of application: **11.12.2013**
(21) Application number: 12171092.5
(22) Date of filing: 06.06.2012
(51) Int. Cl.: B23K 35/36, B23K 35/362

(54) **Method of brazing aluminum parts and copper parts and flux therefor**

(71) Applicant: SOLVAY SA, 1120 Bruxelles (BE)
(72) Inventor: Born, Thomas, 31188 Holle (DE)
(74) Representative: Mross, Stefan P.M.

(57) **Abstract**

The invention concerns a process for brazing of aluminum parts and copper parts, especially according to the flame brazing process. A flux is applied which comprises cesium fluoroaluminate and a potassium or lithium compound, e.g. KOH, KHCO₃, K₂CO₃, potassium formate, potassium acetate or potassium butyrate, and/or Li₂CO₃. The brazing process provides reliable joints.

The invention also concerns a respective flux comprising cesium fluoroaluminate and a potassium compound. It further concerns a respective flux composition comprising the flux and at least one additive selected from the group consisting of solvents, binders, suspension stabilizers, surfactants, thickeners, and thixotropic agents.

## Description

The invention relates to a method of brazing of aluminum parts with copper parts and to a brazing flux and a brazing flux composition therefor.

JP2009172614 discloses the use of a composition comprising Cs₂KAl₃F₁₂ for the brazing of aluminum. The composition is stable when suspended in water.

It is known that aluminum parts and copper parts may be brazed to form a joint using fluoroaluminate fluxes. EP-A-2 236 241, for example, discloses such a brazing process performed in the absence of a solder metal wherein a flux is applied which comprises at least 45 % by weight of cesium fluoroaluminate. The process can be performed in a brazing oven. Alternatively, the necessary heat can be supplied by a torch, by a laser beam or by induction heating.

Brazing of aluminum parts with copper parts according to the flame brazing type - this is, of course, performed in the presence of oxygen, e.g. air - can be performed with a hand-held torch or using carousels or shuttles. It was found that pure cesium fluoroaluminate flux may provide joints which are not satisfactory.

Object of the present invention is to provide an improved process for flame brazing of parts of aluminum (including aluminum alloys) and copper (including copper alloys). Another object of the present invention is to provide a flux and flux compositions which are suitable for the flame brazing of aluminum and copper. These objects and other objects are achieved as apparent from the abstract, the description and the claims.

According to the invention, a method of brazing aluminum parts with copper parts is provided wherein a flux comprising a cesium fluoroaluminate compound is applied which flux comprises at least one flux-modifying additive selected from the group consisting of potassium compounds and lithium compounds in an amount of equal to or greater than 0.1 % by weight, and equal to or lower than 12 % by weight, relative to the total weight of the flux. Preferably, the potassium compound is not a potassium fluoroaluminate. An amount of 0.1 to 10 % by weight is advantageous.

The term "aluminum alloy" includes aluminum containing lower amounts of iron, manganese, magnesium and/or other alloying metals. In principle, any alloying metal might be comprised. The content of magnesium is preferably equal to or lower than 2 % by weight, preferably equal to or lower than 1.5 % by weight. Aluminum alloys with comparably high Mg content can be torch brazed according to the invention.

The term "copper alloys" denotes alloys based on copper which contain at least 45 % by weight of copper and include all types of brass and bronze. If in the following, the generic term "aluminum" is used, it is intended to include "aluminum alloys" unless otherwise specified. If in the following, the generic term "copper" is used, it is intended to include "copper alloys" unless otherwise specified. Here, the generic term "copper" preferably denotes essentially copper for use in or connected to refrigerators and heat exchangers, for example, phosphorous deoxidized copper comprising up to 0.2 % by weight of Co, as described in EP-A 1020538.

The lithium compound and especially the potassium compound act as modifying agents for the flux such that parts of Al or Al-alloy can be brazed with copper parts by flame brazing.

The lower and upper limit of 0.1 and 10 % by weight, respectively, refer to the content of the potassium compound, if only a potassium compound is present, but no lithium compound ; or to the content of the lithium compound if no potassium compound is present : or to the sum of potassium compound or lithium compound if both kinds are present. In the frame of the present invention, the singular is intended to include the plural, and the plural is intended to include the singular. Thus, the term "potassium compound" includes "potassium compounds", and the term "lithium compound" includes the term "lithium compounds".

The term "lithium compound" denotes a compound which contains the lithium in the form of Li⁺. Preferably, lithium compounds are applied having a melting point of equal to or lower than the melting point of the cesium fluoroaluminate with which they are mixed. Advantageously, the melting point of the lithium compound applied is equal to or lower than 500°C. The singular form "lithium compound" is meant to include two lithium compounds or a plurality of lithium compounds, e.g. 3 or more compounds. Preferred lithium compounds are Li₂CO₃ and Li₃AlF₆. Li₂CO₃ is preferred as lithium compound.

The amount of the potassium compound, lithium compound, and the sum of both, respectively, is preferably equal to or greater than 1 % by weight relative to the total weight of the flux. Preferably, the amount of equal to or lower than 8 % by weight relative to the total weight of the flux, more preferably, equal to or lower than 5 % by weight, and especially preferably equal to or lower than 4 % by weight.

In a preferred embodiment, the flux comprises a potassium compound as the modifying agent, or a potassium compound and a lithium compound.

In a very preferred embodiment, the flux comprises only a potassium compound as modifying agent. In view of this highly preferred embodiment, the invention will now be explained in further detail. The statements may also be useful to understand the use of lithium compounds as flux modifying additive.

The amount of the cesium fluoroaluminate compound is preferably equal to or greater than 80 % by weight, relative to the total amount of cesium fluoroaluminate and potassium compound.

More preferably, the amount of the cesium fluoroaluminate compound is equal to or greater than 90 % by weight, relative to the total amount of cesium fluoroaluminate and potassium compound.

Still more preferably, the amount of the cesium fluoroaluminate compound is equal to or greater than 95 % by weight, and especially, equal to or greater than 96 % by weight, relative to the total amount of cesium fluoroaluminate and potassium compound.

Especially preferably, the flux consists of the cesium fluoroaluminate compound and the potassium compound.

The cesium fluoroaluminate and the potassium compound may be applied separately to the parts to be brazed. It is preferred to apply them as a premix. If desired, one of them or both can be applied as such, or, if desired, one or both can be applied in the form of separate composition where the composition includes, as described below, at least one additive selected from the group consisting of solvents, binders, suspension stabilizers, surfactants, thickeners, and thixotropic agents. Alternatively, the flux comprising or consisting of the cesium fluoroaluminate and potassium compound may be applied as a premix or as a flux composition comprising both the cesium fluoroaluminate, the potassium compound and, as described in detail below, at least one additive selected from the group consisting of solvents, binders, suspension stabilizers, surfactants, thickeners, and thixotropic agents.

The term "potassium compound" denotes a compound which contains the potassium in the form of K⁺. Preferably, potassium compounds are applied having a melting point of equal to or lower than the melting point of the cesium fluoroaluminate with which they are applied, especially in mixed form. If desired, potassium compounds may be applied the melting point of which is equal to or lower than 500°C. The singular form "potassium compound" is meant to include two compounds or a plurality of potassium compounds, e.g. 3 or more compounds.

The method of the invention can be applied to any type of brazing of aluminum and copper, e.g. to laser brazing, oven brazing, furnace brazing, brazing under inductive heating or flame brazing. As to oven brazing, care should be given to the fact, as described in [0029] of EP-A-2 236 241, that brazed parts should be brought to a temperature of 548°C or below to prevent the formation of an Al-Cu eutectic alloy.

The process of the invention is especially suitable for flame brazing because reliable joints between aluminum and copper are provided.

If plural forms are used in the description of this invention, they are meant to include the singular form, and if singular forms are used, they are meant to include the plural.

In the following, the flux is described in detail.

A flux comprising cesium fluoroaluminate and at least one flux modifying additive selected from the group consisting of potassium compounds and lithium compounds, which potassium compound and/or lithium compound is contained in a total amount of equal to or greater than 0.1 % by weight and equal to or lower than 12 % by weight relative to the total weight of the cesium fluoroaluminate compound and the potassium compound or lithium compound, is another aspect of the present invention. As described above, the amount of the potassium compound, lithium compound, and the sum of both, respectively, is preferably equal to or greater than 1 % by weight relative to the total weight of the flux. Preferably, the amount of equal to or lower than 8 % by weight relative to the total weight of the flux, more preferably, equal to or lower than 5 % by weight, and especially preferably equal to or lower than 4 % by weight.

The following description explains the flux per se (being an independent aspect of the present invention) and, at the same time, the preferred flux which is applied in the process of the invention for brazing parts of Al or Al alloy to parts of copper or copper alloy. It has to be noted that the flux and the flux composition of the invention can also be used for the brazing of parts of aluminum or aluminum alloys to parts of aluminum or aluminum alloys.

The term "cesium fluoroaluminate" includes those chemical compounds comprising or consisting of cesium, aluminum and fluorine. The term includes the hydrates of cesium fluoroaluminates. A flux consisting of cesium fluoroaluminate is especially preferred. Preferred cesium fluoroaluminates are CsAlF₄, Cs₂AlF₅, Cs₃AlF₆, mechanical mixtures thereof, mixed complexes (adducts), e.g. CsAlF₄-Cs₂AlF₅, or hydrates. The melting point of the resulting mixture is equal to or lower than 548°C, preferably equal to or lower than 546°C. Often, the flux melts in the range of 420 to 480°C.

The flux of the invention will now be described in detail in view of the preferred embodiment wherein it contains a potassium compound.

The potassium compound may be selected among inorganic potassium salts and organic potassium salts. If desired, a single potassium compound can be applied, or two or more potassium compounds. It is also possible to apply one or more inorganic potassium salts and one or more organic potassium salts.

Suitable organic potassium salts are especially the potassium salts of saturated and unsaturated organic acids including the potassium salts of fatty acids. For example, the potassium salts of monobasic, dibasic or tribasic organic acids with 1 to 25 C atoms, optionally substituted by one or more hydroxy groups or one or more keto groups, can be applied. For example, potassium salts of monobasic acids, e.g. potassium salts of formic acid, acetic acid, propionic acid, butyric acid (butane acid), pentanoic acid (valeriane acid), hexanoic acid (capronic acid), heptanoic acid (onanth acid), trifluoroacetic acid, lactic acid, laurine acid, stearic acid, benzoic acid, potassium salts of dibasic acids, e.g. monopotassium oxalate, dipotassium oxalate, monopotassium and dipotassium succinate, monopotassium and dipotassium malonate, monopotassium, dipotassium adipate, monopotassium and dipotassium maleinate, monopotassium and dipotassium fumarate (cis and trans), potassium pyruvate, or monopotassium, dipotassium or tripotassium citrate. Even dibasic or tribasic acids can be used which contain both a potassium cation and a cesium cation.

Another example of suitable organic potassium salts are potassium polyacrylates which additionally may function as a binder.

Often, it is desired that potassium salts of organic acids with a comparably short carbon chain are applied to reduce the hazard of carbon inclusion in the joints. Thus, potassium salts of carboxylic acids are preferred wherein the carboxylic acid is selected from formic acid, acetic acid, propionic acid, butyric acid, and oxalic acid. Monopotassium and dipotassium oxalate and potassium acetate are preferred organic salts.

Inorganic potassium salts are preferred. Potassium salts having no further elements except for at least one element selected from the group consisting of carbon, oxygen, and hydrogen are preferred ; additionally, they may contain Cs⁺ cations. Potassium oxide, potassium hydroxide, potassium carbonate and potassium hydrogen carbonate (which is non-hygroscopic and is also denoted as potassium bicarbonate) are preferred, and potassium bicarbonate and potassium carbonate are very preferred compounds, and potassium carbonate is an especially preferred inorganic potassium compound.

Some of the potassium compounds mentioned above are hygroscopic. It is preferred to produce the flux of the invention shortly before its use. Alternatively, or additionally, it can be stored or handled under inert gas, e.g. under air, nitrogen or carbon dioxide. Still another alternative is to provide a coating on the flux particles, especially a coating on the particles comprising the potassium compound, or to use an anticaking agent, e.g. potassium alumosilicate which also could serve as a potassium source. Another option is to include a dehydrating agent separately in the container used for storing, transporting or handling of the flux, e.g. silica gel in a pouch which may be removed easily before use of the flux.

The amount of the potassium compound may be selected such that a low melting point of the flux results. A very preferred process of the invention is performed with a flux which contains cesium fluoroaluminate and 1 to 5 % by weight, more preferably, 1 to 4 % by weight of K₂O, KOH, KHCO₃ or K₂CO₃ relative to the total weight of the flux.

The explanations above may be applied in a corresponding manner to Li compounds.

While it is assumed that brazing in the absence of a solder metal might be possible, brazing is generally performed in the presence of a solder metal. Usually, the solder metal is a metal alloy having a melting point between 400 and 625°C ; this includes the use of Al/Si solders which may be applied with cesium fluoroaluminate fluxes. A melting point in the range of 450 to 500°C is preferred. Solders useful in the process of the invention are generally known. Often, the solder metal is an alloy based on zinc, for example, solders known as ZnAl15 and ZnAl2/4. Additional amounts of Cu and/or Sn may be comprised in the solder metal.

The particle size of flux and potassium salt is flexible. Preferably, the X₅₀ as determined by laser particle size analytics particle size, is equal to or lower than 100 µm. Preferably, the X₅₀ particle size is equal to or lower than 75 µm.

KOH can be mixed with solid CsAlF₄ in the form of a solution, for example, in the form of a solution of KOH in ethanol. The resulting suspension can be applied as such, or the solvent may be evaporated to provide the solid flux mixture. The solid flux mixture can be suspended in another carrier, e.g. in isopropanol, optionally after being homogenized.

The flux can be applied as such, consisting of cesium fluoroaluminate and potassium compound, or consisting of cesium fluoroaluminate, potassium compound and lithium compound. In this embodiment, fluxes consisting of cesium fluoroaluminate and potassium compound, especially fluxes consisting of cesium fluoroaluminate and K₂CO₃, without additives, are preferred, e.g. as dry powder ; for example, such a flux can be applied electrostatically or by applying low temperature plasma, as described in WO 2006/100054. In such a plasma process, finely divided flux powder is partially molten by a low temperature plasma beam and sprayed onto the surface of the aluminum part and copper parts to be joined.

The inventors found that CsAlF₄ has a melting range with two endothermic peaks in the DSC (Differential Scanning Calorimetry) at 440°C and 460°C. If, for example, KOH or K₂CO₃ is added, and the resulting flux is subjected to the DSC analysis, an additional peak is observed at 410 to 420°C. The flux obtained after a heat treatment under formation of an additional peak at 410 to 420°C still is an active brazing flux. Accordingly, the flux of the invention, in one alternative, is a flux which has not been heat-treated. In another alternative, the flux, after heat treatment, provides a DSC peak in the range from 410 to 420°C.

A preferred flux is characterized by providing at least one endothermic peak in the DSC analysis in the range of 410 to 420°C. Peaks in the DSC indicate a physical transformation, e.g. a phase transformation like melting or the transformation of one modification of a solid into another (e.g. amorphous to crystalline, one crystalline form into another crystalline form).

In one embodiment, the flux comprises this at least one endothermic DSC peak when the flux is prepared by mixing the cesium fluoroaluminate and the potassium salt and subjected to a heat treatment. The heat treatment includes a step of heating the flux to a temperature of equal to or lower than 625°C, preferably up to 550°C. According to another embodiment, the flux was subjected to a thermal treatment and comprises this at least one endothermic DSC peak in the range of 410 to 420°C after the thermal treatment. A flux comprising at least one endothermic DSC peak in the range of 410°C, as indicated in a DSC scan performed immediately after the flux manufacture, or after the thermal treatment as described, is very suitable for the application in the brazing process of the invention.

The advantage of the heat treated flux is that it is not hygroscopic.

Preferably, the flux of the present invention comprises CsAlF₄ and Cs₂KAl₃F₁₂.

The brazing process of the present invention can be performed using the flux of the invention after it had been molten once, cooled and, if necessary, comminuted, e.g. by milling. The advantage is that the flux is not hygroscopic after having been molten.

In one embodiment, the flux is applied in the form of a flux composition. The flux composition comprises the flux (which contains the flux modifiying additives as described above) as described above and additives which serve to improve the method of applying the flux mixture to the surface of the parts to be joined and/or to improve the properties of the parts coated with the respective flux ; the additive or additives may improve, for example, the adhesion of the flux to the parts or the surface properties of the joined parts or the anti-corrosive properties. Preferably, the flux composition contains the flux and at least one additive selected from the group consisting of solvents, binders, suspension stabilizers, surfactants, thickeners, and thixotropic agents. To be noted that potassium compounds and lithium compounds which are denoted as flux modifying additives in this invention, are not considered as additive.

The brazing process can be performed applying the flux according to the dry fluxing method. The flux may, for example, be provided to the surface of the items to be brazed by pneumatic transport and adheres mechanically to the surface of the items to be brazed.

If the flux is not applied according to the dry fluxing method, it is applied according to the wet fluxing method. In the wet fluxing method, a flux composition is applied which contains the flux and further components.

The flux composition can, for example, be sprayed onto at least one of the parts to be joined, it can be painted on their surface with brushes, or it can be applied by immersing parts into liquid composition. A flux composition for wet application which contains the flux described above is another embodiment of the present invention. A flux composition containing the flux of the invention and further additives is still another aspect of the present invention. The following detailed description explains the flux composition per se, and at the same time, it explains in detail the brazing process of the present invention when it is performed with the flux composition.

According to one embodiment, the flux composition of the present invention suitable for being applied in the wet fluxing method contains the flux suspended in water, water-free organic liquids or aqueous organic liquids. Preferred liquids are those that have a boiling point at ambient pressure (1 bar abs) of equal to or lower than 350°C. The term "suspended in water" does not exclude that a part of the flux composition is dissolved in the liquid ; this may be the case especially when water or aqueous organic liquids are contained. Liquids that are preferred are deionized water, mono-, di- or tribasic aliphatic alcohols, especially those with 1 to 4 carbon atoms, e.g. methanol, ethanol, isopropanol, or ethylene glycol, or glycol alkyl ethers, wherein alkyl preferably denotes linear or branched aliphatic C1 to C4 alkyl. Non-limiting examples are glycol monoalkyl ethers, e.g. 2-methoxyethanol or diethylene glycol, or glycol dialkylethers, for example, dimethyl glycol (dimethoxyethane). Mixtures comprising two or more of the liquids are also suited very well. Isopropanol or mixtures containing isopropanol are especially suitable.

In a preferred embodiment, the composition comprising the flux and in a liquid also contains additives which improve the flux composition properties.

In an especially preferred embodiment the flux is present in the form of a flux composition wherein the flux is suspended in a liquid which also contains a binder. Binders improve, for example, the adhesion of the flux mixture after their application on the parts to be brazed. Thus, the wet flux method using a flux composition comprising flux, binder and water, organic liquid or aqueous organic liquid is a preferred embodiment of the brazing process of the present invention. The liquid serves as solvent for some additives or as a carrier to disperse the flux or other insoluble components of the composition.

Suitable binders can be selected for example from the group consisting of organic polymers. These binders form a coating on aluminum parts or aluminum alloy parts when they are physically dried (i.e., they form a solid coating after the liquid is removed by evaporation), or when they are chemically dried (they form a solid coating e.g. under the influence of chemicals, e.g. oxygen or light which causes a cross linking of the molecules, or by a thermal treatment which provokes cross linking). Both mechanisms may occur simultaneously. Suitable polymers include polymers which are present in the composition in the form of a dispersion of solid particles dispersed in the liquid, and polymers which are present in the form of a solution dissolved in the liquid. Highly suitable binders are polyolefines, e.g. butyl rubbers, polyurethanes, resins, phthalates, polyacrylates, polymethacrylates, vinyl resins, epoxy resins, nitrocellulose, polyvinyl acetates or polyvinyl alcohols. Flux compositions containing water as a liquid and water-soluble polymer or a polymer dispersed in water, for example, polyvinylalcohol or polyurethane, are especially suitable because they have the advantage that, during the brazing process, water is evaporated instead of possibly flammable organic liquids.

The compositions may include other additives which improve the properties of the composition, for example, suspension stabilizers, surfactants, especially nonionic surfactants, e.g. Antarox BL 225, a mixture of linear C8 to C10 ethoxylated and propoxylated alcohols, thickeners, e.g. methyl butyl ether, thixotropic agents, e.g. gelatine or pectines, or a wax as described in EP-A 1808264.

The content of the flux in the total composition (including liquid or liquids, thixotropic agents, surfactants and binders, if present) generally is equal to or greater than 0.75 % by weight. Preferably, it is equal to or greater than 1 % by weight. More preferably, the flux mixture content in the composition is equal to or greater than 5 % by weight, very preferably, equal to or greater than 10 % by weight of the total flux composition.

Generally, the flux content in the composition is equal to or lower than 70 % by weight. Preferably, it is equal to or lower than 50 % by weight. The flux is preferably contained in the form of a mixture.

The binder, if present, is generally contained in an amount of equal to or greater than 0.1 % by weight, preferably equal to or greater than 1 % by weight of the total flux composition. The binder, if present, is generally contained in an amount equal to or lower than 30 % by weight, preferably equal to or lower than 25 % by weight of the total composition.

The thixotropic agent, if present, is generally contained in an amount of equal to or greater than 1 % by weight of the total flux composition. Generally, if present, it is contained in an amount equal to or lower than 20 % by weight, preferably in an amount equal to or lower than 10 % by weight.

The thickener, if present, is generally contained in an amount of equal to or greater than 1 % by weight, preferably equal to or greater than 5 % by weight of the total flux composition. Generally, the thickener, if present, is contained in an amount equal to or lower than 15 % by weight, preferably equal to or lower than 10 % by weight of the total composition.

Highly suitable flux compositions for wet applications contain 10 to 70 % by weight of the flux, 1 to 25 % by weight binder, 0 to 15 % by weight of a thickener, 0 to 10 % by weight of a thixotropic agent, and 0 to 5 % by weight of other additives, e.g. a surfactant or a suspension stabilizer. Preferably, the reminder to 100 % by weight is water, an organic solvent or an aqueous organic solvent ; water is especially preferred.

In another embodiment, the flux composition is free of any water or water-free or aqueous organic liquid, but contains the flux (and, if desired, additives, e.g. surfactants, thickener or thixotropic agents) as described above, and a water-soluble organic polymer as a binder which is present in the form of a water soluble package for the flux. For example, polyvinyl alcohol is very suitable as water-soluble package for the flux as described in US patent application publication 2006/0231162. Such packages can be handled without dust formation, and after addition of water or aqueous organic solvents, they form a suspension of the flux in water while the water soluble polymer dissolves and provides the binder function.

The suspension can be applied in a known manner, e.g. by spraying, painting, or by dipping the parts to be joined into the suspension.

If desired, parts coated with the flux composition can be dried before brazing and then later be brazed, or drying and brazing can be performed immediately after one another.

The weight per area of the flux is preferably equal to or higher than 5 g/m². More preferably, it is equal to or higher than 10 g/m². Preferably, it is equal to or lower than 100 g/m², especially preferably equal to or lower than 40 g/m².

The heat, as mentioned above, is preferably provided by an open flame, but inductive heating or heating by means of a laser is also possible.

For flame brazing, it is preferred to use double headed torches to provide the necessary heat fast to the parts to be joined.

Often, it may be preferred if brazing is performed using a reducing flame.

Often, brazing is performed at a temperature equal to or lower than 545°C, preferably equal to or lower than 500°C, more preferably equal to or lower than 480°C. The temperature must be at least as high as the melting point of the respective flux. Preferably, the temperature at brazing is equal to or higher than 400°C, preferably equal to or higher than 420°C. A highly preferred range for brazing is 450 to 500°C.

During brazing, an alloy forms from aluminum or the aluminum alloy and copper. The formed alloy has a melting point - about 547°C or 548°C which temperature may be influenced by alloyed metals in the aluminum or copper, if present - considerably lower than that of the aluminum (or aluminum alloys) and copper. A relatively fast diffusion of copper in aluminum and aluminum in copper, respectively, causes a fast expansion of the low-melting alloy from copper and aluminum. Thus, it is preferred to perform brazing quickly and, if necessary, to cool the joined parts after brazing to a temperature low enough such that after the parts are desirably joined, no further alloy of aluminum and copper forms.

The process of the present invention can, for example, also be applied to braze copper and aluminum-magnesium alloys.

With the process of the present invention, for example, copper tubes can be joined to aluminum or aluminum alloy parts, e.g. to aluminum tubes or compressors with aluminum housings, or copper plates can be joined with aluminum plates, for example, for electronic circuits.

An advantage of the process is the relatively low brazing temperature and the reliable joints between copper or copper alloys and aluminum or aluminum alloys. As described above, an alloy forms from aluminum and copper with a melting point of about 547°C or about 548°C. If brazing is performed at a too high temperature, the joined work pieces erode more and more because more and more alloy forms. The use of a low-melting brazing flux prevents erosion of the joined parts, especially if the use of a low melting brazing flux is combined with the sufficiently quick lowering of the temperature of the joined pieces after brazing, as described above to stop the formation of the alloy between aluminum and copper.

Should the disclosure of any of the patents, patent applications, and publications that are incorporated herein by reference be in conflict with the present description to the extent that it might render a term unclear, then the present description shall take precedence.

The following examples will describe the invention in further detail without the intention to limit it.

### Example 1 : Manufacture of a flux comprising a potassium salt

1.1. 1000 g of cesium fluoroaluminate (available from Solvay Fluor GmbH, Hannover, Germany, under the trade name Nocolok^{®} Cs Flux) and 30 g of KOH, dissolved in ethanol, were mixed. A suspension of flux was obtained which can be used as such. A dry flux was obtained by evaporation of the solvent. The dry flux powder may be homogenized again and be used as a dry flux or as suspension in a liquid carrier, e.g. in i-propanol.
1.2. 1000 g of cesium fluoroaluminate (available from Solvay Fluor GmbH, Hannover, Germany, under the trade name Nocolok^{®} Cs Flux) and 35 g of KOH, dissolved in ethanol, were mixed. A suspension of flux was obtained which can be used as such. A dry flux was obtained by evaporation of the solvent.
1.3. 1000 g of cesium fluoroaluminate (available from Solvay Fluor GmbH, Hannover, Germany, under the trade name Nocolok^{®} Cs Flux) and 30 g of K₂CO₃, having a particle size of > 200 µm available from Sigma Aldrich, Germany, as "209619 quality" were mixed under comminuting any caked particles. The dry flux powder may be homogenized again and be used as a dry flux or as suspension in a liquid carrier, e.g. in i-propanol.
1.4. 1000 g of cesium fluoroaluminate (available from Solvay Fluor GmbH, Hannover, Germany, under the trade name Nocolok^{®} Cs Flux) and 30 g of K₂CO₃, having a particle size of > 200 µm available from Merck, Germany, as "4928.1000 quality" were mixed under comminuting any caked particles.
1.5. Cesium fluoroaluminate (available from Solvay Fluor GmbH, Hannover, Germany, under the trade name Nocolok^{®} Cs Flux) and KOH, dissolved in ethanol, were mixed. The constituents were applied in amounts such that the composition consisted of said two constituents (plus the solvent), and the content of KOH was ~3 % by weight. The solvent was evaporated off. The solid flux was subjected to a thermal treatment by heating it in a Differential Scanning Calorimeter. A peak at 410 to 420°C was observed indicating a lowered melting point, After cooling, the treated flux was analyzed by XRD (Röntgen diffractometry). The compounds CsAlF₄ and Cs₂KAl₃F₁₂ were identified.

### Example 2 : Brazing of tubes of aluminum (99.5 % Al) and copper (99 % Cu) using cesium fluoroaluminate/KOH flux

The aluminum tubes had, at the end which was to be joined with the copper tubes, the form of a tulip and served as the outer tubes, the copper tubes had a lower diameter and were inserted into the tulip-formed end of the aluminum tubes.

The flux was prepared as described above by mixing cesium fluoroaluminate and KOH (as ethanolic solution), evaporation of the ethanol and addition of isopropanol as carrier. Thus, the resulting composition consisted of cesium fluoroaluminate, essentially in the form of CsAlF₄, as available from Solvay Fluor GmbH, Germany, as Nocolok^{®} Cs Flux, and KOH, re-suspended in i-propanol. The content of cesium fluoroaluminate was 97 % by weight and the content of KOH was 3 % by weight, relative to the total solids content (cesium fluoroaluminate and KOH).

The tubes were cleaned on the surface to remove any protective oil, the copper tube was treated with a sanding fleece, a solder ring (Zn/Al alloy) was slipped over the copper tube, the copper tube was inserted into the tulip like end of the aluminum tube to form an assembly, the flux composition was applied to the copper tube and the aluminum tube close to the desired joint of the assembly, the flames of a double headed gas burner (30 % propane/70 % butane) were ignited, and the joint was heated. The solvent burned quickly away, and then the flux melted and cleaned the surface of the aluminum tube and of the copper tube, the solder melted, and a joint assembly formed. The flame was removed, and after cooling, the assembly of aluminum/copper tube was joined by brazing. The formed joint was cut up perpendicular to the elongation of the joint tubes, and the appearance of the brazing was evaluated and found to be very satisfactory. Example 3 : Brazing of Al tubes and copper tubes with varying content of KOH

Example 2 was repeated, but the content of KOH in the sum of cesium fluoroaluminate and KOH was set to 3.5 % by weight. The brazing joint was considered as satisfactory.

Example 4 (comparison example) : Brazing with cesium fluoroaluminate in the absence of added KOH

Example 2 was repeated, but with pure cesium fluoroaluminate suspended in isopropanol. Also here, the cesium fluoroaluminate which consisted essentially of CsAlF₄ commercially available from Solvay Fluor GmbH was used. KOH was not added. The joint was considered to be not satisfactory.

### Example 5 : Stability tests

To check the stability of fluxes comprising cesium fluoroaluminate and KOH or K₂CO₃, respective mixtures were manufactured and subjected to air (which was not specifically dried).

The tests were performed in a laboratory fume hood with a throughput of fresh air of - 350 m³/hour.

500 g of the respective flux were evenly distributed on an open plastic tray (24 by 26 cm) and subjected to the fresh air for 10 days. For comparison, pure cesium fluoroaluminate flux (Nocolok^{®} Cs Flux) was treated in the same manner. The weight gain observed after 10 days is assembled in table 1.

**Table 1 : Moisture uptake after 10 days in fresh air**

| Test N° | Flux | Weight gain [% by weight] |
|---|---|---|
| 5.1 | 485g CsAlF₄+ 15 g K₂CO₃ | 0.51 |
| 5.2 | 485g CsAlF₄+ 15 g KOH | 0.33 |
| 5.3 (comparison) | 500g CsAlF₄ | 0.05 |

The tests demonstrate that the flux of the invention shows a very moderate uptake of moisture.

### Example 6 : Stability test of brazed coupons

General procedure : the aluminum coupons (99.5 % by Al) were coated with a paste (isopropanol as carrier) of the flux composition when CsAlF₄/KOH was used ; CsAlF₄/K₂CO₃ were applied as dry flux. The flux load was 0.0625g = 100g/m², and the coated coupons were thermally treated, under a flow of 11 l/min of N₂, in a brazing oven made from glass at a temperature up to 580°C to simulate a brazing process.

The weight gain was determined by weighing the samples immediately after the thermal treatment and after 10 days in fresh air. Results are given in table 2.

**Table 2 : Weight gain of thermally treated Al coupons**

| Test N° | Sample Constitution [% by weight] | Weight gain [% by weight] |
|---|---|---|
| 6.1 | 97 CsAlF₄+ 3 KOH | 0.16 |
| 6.2 | 97 CsAlF₄+ 3 K₂CO₃ | 0.128 |
| 6.3 | 97 CsAlF₄+ 3 K₂CO₃ (45 µm) | 0.016 |
| 6.4 (comparison) | 100 CsAlF₄ | 0.032 |

| | | |
|---|---|---|
| The tests demonstrate that the thermally treated samples are non-hygroscopic. | | |

### Example 7 : Test to determine residues after brazing with KOH as additive

General procedure : the aluminum coupons (99.5 % by Al) were coated with a paste-like flux composition (carrier was isopropanol) containing CsAlF₄/KOH in a weight ratio of CsAlF₄:KOH of 97:3 (obtained as described above using an ethanolic solution of KOH). The flux was applied to Al coupons using different flux loads. The coupons were thermally treated, under a flow of 11 l/min of N₂, in a brazing oven made from glass at a temperature up to 580°C.

The thermally treated coupons were then visually checked for non-molten residues to find out if part of the flux is not active under the conditions applied.
7.1 : Flux load : 15 g/m² : no residues.
7.2 : Flux load : 30 g/m² : no residues.
7.3 : Flux load : 60 g/m² : no residues.

### Example 8 : Test to determine residues after brazing with K₂CO₃ as additive

General procedure : the aluminum coupons (99.5 % by Al) were coated with the flux composition in powder form comprising cesium fluoroaluminate (CsAlF₄) and K₂CO₃ (particle size 200µm and smaller) in a weight ratio of 97:3 under different flux loads and thermally treated, under a flow of 11 l/min of N₂, in a brazing oven made from glass at a temperature up to 580°C.

The thermally treated coupons were then visually checked for non-molten residues to find out if part of the flux is not active under the conditions applied.
8.1 : Flux load : 15 g/m² : no residues.
8.2 : Flux load : 30 g/m² : no residues.
8.3 : Flux load : 60 g/m² : no residues.

### Example 9 : Activity tests with CsAlF₄/K₂CO₃

General procedure : the aluminum coupons (99.5 % by Al) were coated with a dry mixture of cesium fluoroaluminate (CsAlF₄) and K₂CO₃ under different ratios and flux loads and thermally treated, under a flow of 11 l/min of N₂, in a brazing oven made from glass at a temperature to simulate a brazing process.

The thermally treated coupons were then visually checked for non-molten residues to find out if part of the flux is not active under the conditions applied.
9.1 : CsAlF₄:K₂CO₃ = 96.5:3.5 (w/w); Flux load : 100 g/m². Particle size of K2CO3 : 45µ. Heating up to 580°C.
9.2 : CsAlF₄:K₂CO₃ = 97.5:2.5 (w/w) ; Flux load : 50 g/m². Heating up to 605°C.
9.3 : CsAlF₄:K₂CO₃ = 97.5:2.5 (w/w) ; Flux load : 100 g/m². Heating up to 605°C.
9.4 : CsAlF₄:K₂CO₃ = 97:3 (w/w) ; Flux load : 50 g/m². Heating up to 605°C.
9.5 : CsAlF₄:K₂CO₃ = 97:3 (w/w) ; Flux load : 100 g/m². Heating up to 605°C.
9.6 : CsAlF₄:K₂CO₃ = 97:3 (w/w) ; Flux load : 50 g/m². Heating up with a torch indirectly.
9.7 : CsAlF₄:K₂CO₃ = 97:3 (w/w) ; Flux load : 100 g/m². Heating up with a torch indirectly.

No unreacted residues were visually identified in all tests.

### Example 10 : Brazing of Al and Cu tubes using a mixture of cesium fluoroaluminate and K₂CO₃

The aluminum tubes had, at the end which was to be joined with the copper tubes, the form of a tulip and served as the outer tubes, the copper tubes had a lower diameter and were inserted into the tulip-formed end of the aluminum tubes.

The tubes were cleaned on the surface to remove any protective oil, the copper tube was treated with a sanding fleece, a solder ring (Zn/Al alloy) was slipped over the copper tube, the copper tube was inserted into the tulip like end of the aluminum tube to form an assembly, the flux mixture was applied in dry form to the copper tube and the aluminum tube close to the desired joint of the assembly, the flames of a double headed gas burner (30 % propane/70 % butane) were ignited, and the joint was heated. The flux melted and cleaned the surface of the aluminum tube and of the copper tube, the solder melted, and a joint assembly formed. The flame was removed, and the assembly of aluminum/copper tube was joined by brazing. After cooling, he formed joint was cut up perpendicular to the elongation of the joint tubes, and the appearance of the brazing was evaluated, i.a. by cuts.

Mixtures comprising 2.5 % by weight and 3 % by weight of K₂CO₃, respectively, balance to 100 % by weight being cesium tetrafluoroaluminate, were applied.

The joints were found to be very satisfactory.

### Example 11 : Brazing with a mixture of cesium fluoroaluminate and Li₃AlF₆

Example 10 was repeated using a mixture of CsAlF₄ and Li₃AlF₆ in w/w ratio of 95:5.

The flow of the solder was considered to be very satisfactory, but some "pearls" were observed indicating that a part of the flux remained inactive.

## Claims

1. A method of brazing aluminum parts with copper parts wherein a flux is applied comprising a cesium fluoroaluminate compound which flux comprises at least one flux-modifying additive selected from the group consisting of potassium compounds and lithium compounds in a total amount of equal to or greater than 0.1 % by weight, and equal to or lower than 12 % by weight, relative to the total weight of the flux.

2. The method of claim 1 wherein the brazing method is flame brazing.

3. The method of claim 1 or 2 wherein the flux comprises a potassium compound, and the potassium compound is contained in an amount of equal to or greater than 1 % by weight and equal to or lower than 4 % by weight, relative to the total weight of cesium fluoroaluminate and potassium compound.

4. The method of anyone of claims 1 to 3 wherein the flux consists of said cesium fluoroaluminate and potassium compound.

5. The method of anyone of claims 1 to 4 wherein the potassium compound is an inorganic potassium compound and is selected from KOH, KHCO₃ and K₂CO₃.

6. The method of anyone of claims 1 to 4 wherein the flux comprises an organic potassium compound selected from the group consisting of potassium formate, potassium acetate or potassium butyrate.

7. The method of anyone of claims 1 to 6 wherein the flux is present in the form of a flux composition which contains the flux and at least one additive selected from the group consisting of solvents, binders, suspension stabilizers, surfactants, thickeners, and thixotropic agents.

8. The method of claim 7 wherein the flux composition comprises a solvent, a binder or both.

9. The method of anyone of claims 2 to 8 wherein brazing is performed using a reducing flame.

10. A flux comprising cesium fluoroaluminate and at least one flux modifying additive selected from the group consisting of potassium compounds and lithium compounds, which potassium compound and/or lithium compound is contained in a total amount of equal to or greater than 0.1 % by weight and equal to or lower than 12 % by weight relative to the total weight of the cesium fluoroaluminate compound and the potassium compound or lithium compound.

11. The flux of claim 10 comprising at least one potassium compound
wherein the at least one potassium compound is present in an amount of equal to or greater than 1 % by weight and equal to or lower than 5 % by weight, relative to the total weight of cesium fluoroaluminate and potassium compound.

12. The flux of claim 10 or 11 wherein the flux consists of said cesium fluoroaluminate and potassium compound.

13. The flux of anyone of claims 10 to 12 wherein the potassium compound is an inorganic potassium compound and is selected from KOH, KHCO₃ and K₂CO₃ or an organic potassium compound selected from the group consisting of potassium formate, potassium acetate or potassium butyrate.

14. The flux of anyone of claims 10 to 13 consisting of cesium fluoroaluminate and KOH, KHCO₃ and K₂CO₃.

15. The flux of anyone of claims 10 to 14 comprising Cs₂KAl₃F₁₂.

16. A flux composition comprising the flux of anyone of claims 10 to 15 and at least one additive selected from the group consisting of solvents, binders, suspension stabilizers, surfactants, thickeners, and thixotropic agents.
